Europäisches Patentamt

European Patent Office

Office européen des brevets

(11) Veröffentlichungsnummer : **0 130 138**
**B1**

# EUROPÄISCHE PATENTSCHRIFT

(45) Veröffentlichungstag der Patentschrift :
30.09.87

(51) Int. Cl.⁴ : **F 16 G 15/00**

(21) Anmeldenummer : **84730055.5**

(22) Anmeldetag : **23.05.84**

(54) **Bauteil für Rundgliederketten.**

(30) Priorität : **27.05.83 DE 3319773**

(43) Veröffentlichungstag der Anmeldung :
**02.01.85 Patentblatt 85/01**

(45) Bekanntmachung des Hinweises auf die Patenterteilung : **30.09.87 Patentblatt 87/40**

(84) Benannte Vertragsstaaten :
**AT DE GB IT SE**

(56) Entgegenhaltungen :
**DD-A- 33 970**
**FR-A- 1 270 232**
**FR-A- 1 490 091**
**GB-A- 2 088 520**
**US-A- 2 179 564**

(73) Patentinhaber : **RUD-Kettenfabrik Rieger & Dietz GmbH u. Co.**
**Friedensinsel**
**D-7080 Aalen 1 (DE)**

(72) Erfinder : **Smetz, Reinhard**
**Silcherstrasse 17**
**D-8860 Baldingen (DE)**
Erfinder : **Speich, Helmut**
**Jahnstrasse 51**
**D-7081 Hüttlingen (DE)**

(74) Vertreter : **Böning, Manfred, Dr. Ing. et al**
**Patentanwälte Dipl.-Ing. Dieter Jander Dr. Ing. Manfred Böning Kurfürstendamm 66**
**D-1000 Berlin 15 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein für den Einsatz in Verbindung mit Rundgliederketten bestimmtes Bauteil gemäß dem Oberbegriff des Anspruches 1.

Ein als Verkürzungsorgan ausgebildetes Bauteil der in Betracht gezogenen Art ist aus der US-A-2 179 564 bekannt. Das bekannte Bauteil verfügt über einen einen Durchlaß für einen Kettenstrang bildenden quadratischen Kanal, in dem im Abstand voneinander zwei Platten mit jeweils einem Kreuzschlitz angeordnet sind. Zwei sich gegenüberliegende Wände des Kanales sind im Bereich zwischen den Platten mit Bohrungen zur Aufnahme der von den Schenkeln eines U-förmigen Bügels gebildeten Verriegelungselemente versehen. In der Verriegelungsstellung stehen die fluchtende Bohrungen für einen Sicherungssplint aufweisenden freien Enden der Verriegelungselemente über eine der Außenwände des Kanals vor. Das Entfernen und Wiederanbringen des Sicherungssplintes und das Einführen der Verriegelungselemente in die Verriegelungsstellung ist mühsam. Hinzu kommt, daß bei einem Einsatz des bekannten Bauteils unter rauhen Betriebsbedingungen mit Beschädigungen des ungeschützten Sicherungssplintes zu rechnen ist und dieser während der Handhabung des Bauteiles leicht verloren gehen kann. Schließlich besteht bei der Führung und Abstützung der Verriegelungselemente innerhalb des Kanals Gefahr, daß sich die Verriegelungselemente unter Last verbiegen.

Bekannt ist ausserdem aus der DD-A-33 970 ein Kettenschloss, mit dem der Einhängeumfang einer endlosen Kette verändert werden kann. Dieses Kettenschloss besitzt zwei in einem Gehäuse nebeneinander angeordnete, aus zwei Querschlitzen und einem gemeinsamen Längsschlitz gebildete Kreuzschlitze vergleichsweise grosser Länge. Um die in den Kreuzschlitzen geführten Kettenglieder in einer einer bestimmten Kettenschlaufengrösse entsprechenden Position arretieren zu können, ist das bekannte Kettenschloss mit einem einzelnen, lösbaren Verriegelungsbolzen versehen, der in der Verriegelungstellung nach Art eines Spreizkeiles schräg gegen die Buge zweier im Längsschlitz nebeneinander liegender Kettenglieder drückt. Bei diesem bekannten Kettenschloss findet eine asymmetrische Gliedabstützung statt und auf die Buge der in die abgestützten Kettenglieder eingehängten Kettenglieder wird eine störende Querkraft ausgeübt. Das Verriegelungselement ist nicht gegen Verlust gesichert.

Ein weiteres für den Einsatz in Verbindung mit Rundgliederketten bestimmtes Bauteil mit einem Kreuzschlitz zu Kettenführung ist aus der FR-A-1 270 232 bekannt. Bei diesem Bauteil wird als hin- und herverschiebbares Verriegelungselement für ein im Kreuzschlitz zu arretierendes Kettenglied eine zwischen zwei Platten geführte, aus Flachmaterial bestehende Gabel verwendet, deren Enden in der Verriegelungsstellung keine befriedigende Abstützung erfahren und Spreizkräften ausgesetzt sind.

Bei einem anderen aus der FR-A-1 490 091 bekannten Bauteil werden zur Arretierung eines Kettengliedes in einem Kreuzschlitz zwei durch Federn in eine Spreizstellung gezogene schwenkbare Sperrklinken verwendet, die einen Kettendurchzug in nur einer Richtung zulassen. Dieses Bauteil ist aufwendig gebaut und Mittel zum Überführen der Sperrklinken in eine unwirksame Position fehlen.

Einen gegen die Wirkung einer Feder verschiebbaren Verriegelungsbolzen zeigt schliesslich die GB-A-2 088 520. Der Verriegelungsbolzen hat in diesem Falle die Aufgabe, ein in eine Verkürzungsklaue eingehängtes Kettenglied in seiner Lage zu sichern, d. h. er wird nicht zur Lastübertragung herangezogen.

Der Erfindung liegt die Aufgabe zugrunde, ein Bauteil der in Betracht gezogenen Art zu schaffen, dessen Verriegelungsbolzen gut abgestützt und leicht handhabbar sind und das keine Teile aufweist, die während der Handhabung verloren gehen können. Diese Aufgabe wird bei einem gattungsgemäßen Bauteil erfindungsgemäß die Merkmale des Kennzeichens des Anspruches 1 gelöst.

Weitere Einzelheiten und Merkmale der Erfindung ergeben sich aus den Unteransprüchen und der nachfolgenden Beschreibung mehrerer in der beigefügten Zeichnung dargestellter Ausführungsbeispiele. Es zeigen :

Figur 1 die Draufsicht auf ein erstes als Kettenstopper für eine Rundgliederkette ausgebildetes Bauteil,

Figur 2 eine Modifikation des Bauteiles gemäß Figur 1,

Figur 3 die Draufsicht auf ein weiteres als Kettenstopper ausgebildetes Bauteil,

Figur 4 eine Seitenansicht des Bauteiles gemäß Figur 3,

Figur 5 teilweise im Schnitt die Vorderansicht eines als Verkürzungsorgan ausgebildeten Bauteiles,

Figur 6 einen Schnitt längs der Linie VI-VI in Figur 5,

Figur 7 einen Schnitt längs der Linie VII-VII in Figur 5,

Figur 8 einen Schnitt durch ein weiteres Bauteil,

Figur 9 einen Schnitt längs der Linie IX-IX in Figur 8,

Figur 10 einen Schnitt längs der Linie X-X in Figur 9,

Figur 11 eine Draufsicht auf das Bauteil gemäß Figuren 8-10 in einer Zwischenstellung,

Figur 12 eine Draufsicht auf das Bauteil gemäß Figuren 8-10 in einer weiteren Stellung,

Figur 13 ein weiteres als fernbedienendes Verkürzungsorgan ausgebildetes Bauteil,

Figur 14 einen Schnitt längs der Linie XIV-XIV in Figur 13,

Figur 15 die Ansicht des Bauteiles gemäß Figuren 13 und 14 in Richtung des Pfeiles 15 in Figur 14,

Figur 16 den Einsatz eines Bauteiles der in den Figuren 13-15 dargestellten Art,

Figur 17 den Einsatz eines modifizierten Bauteiles der in den Figuren 13-15 dargestellten Art,

Figur 18 ein mit einer Ringgabel gekuppeltes Bauteil,

Figur 19 ein mit einem Anschlußbügel gekuppeltes Bauteil und

Figur 20 ein mit einer Aufnahme für einen Haltegurt gekuppeltes Bauteil.

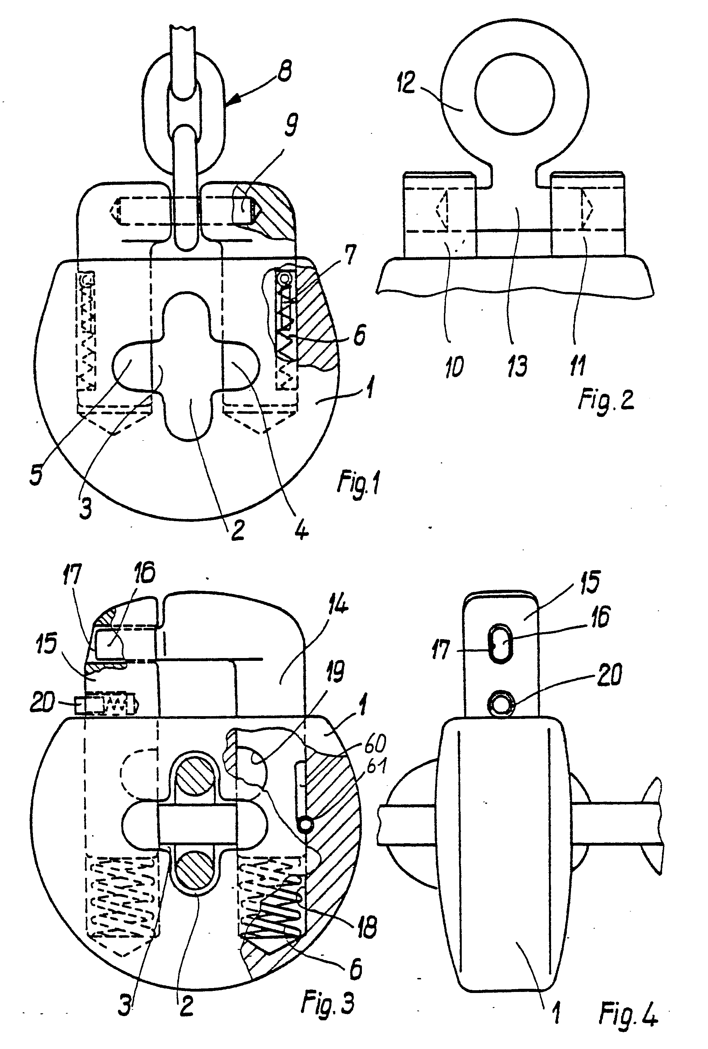

In Figur 1 ist 1 der Grundkörper eines Bauteiles mit zwei sich kreuzenden Schlitzen 2 und 3. In den Bereich der Enden des Schlitzes 3 ragen Teile zweier Verriegelungsbolzen 4 und 5, die durch Federn 6 in der gezeigten Sperrstellung für den Schlitz gehalten werden. Die Bolzen 4 und 5 können entgegen der Wirkung der Federn 6 um einen bestimmten, durch Anschläge 7 begrenzten Betrag verschoben werden, um den Schlitz 3 freizugeben. Die Einleitung der Verschiebung kann über einen Kettenstrang 8 erfolgen, der über einen Querbolzen 9 mit den Enden der Verriegelungsbolzen 4 und 5 in Verbindung steht.

Die den Querbolzen 9 aufnehmenden Enden der Verriegelungsbolzen 4 und 5 sind leicht abgewinkelt. Eine Lösung mit besonders einfach ausgebildeten Verriegelungsbolzen 10 und 11 zeigt die Figur 2. Die Verriegelungsbolzen 10 und 11 können mit geringem Aufwand aus Drahtmaterial hergestellt werden. Sie werden durch die Öse 12 mit ihren Querbalken 13 zu einem Bügel verbunden.

Zwei direkt zu einem Bügel miteinander verbundene Verriegelungsbolzen 14 und 15 finden bei dem Bauteil gemäß Figur 3 und 4 Verwendung. Der Verriegelungsbolzen 14 greift hier mit einem Vorsprung 16 in eine Aufnahme 17 des Verriegelungsbolzens 15. Die Verriegelungsbolzen 14 und 15 sind auch bei diesem Bauteil in Bohrungen 18 eines Grundkörpers 1 geführt. Sie werden wiederum durch Federn 6 in einer Stellung gehalten, in der sie den Schlitz 3 sperren. Während die Verriegelungsbolzen 4 und 5 aus der Sperrstellung in eine Freigabestellung gezogen werden müssen, lassen sich die Verriegelungsbolzen 14 und 15 durch Drücken aus der Sperrstellung in die Freigabestellung überführen. Diese Art der Betätigung ermöglichen an dèn Verriegelungsbolzen angebrachte Quernuten 19, die in den Bereich des Schlitzes 3 überführbar sind, um diesen freizugeben. Der Vorteil einer solchen Ausbildung der Verriegelungsbolzen besteht darin, daß sie ständig beidseits des Schlitzes 3 in den Bohrungen 18 geführt sind. Ein allgemein mit 20 bezeichneter Rastmechanismus verhindert eine ungewollte Verlagerung der Verriegelungsbolzen aus ihrer Sperrstellung in die Freigabestellung. Die Hubbewegung der Verriegelungsbolzen 14, 15 wird durch einen in eine angeschmiedete seitliche Aussparung 60 greifenden Anschlag 61 begrenzt, der vorzugsweise aus einer Spannhülse besteht.

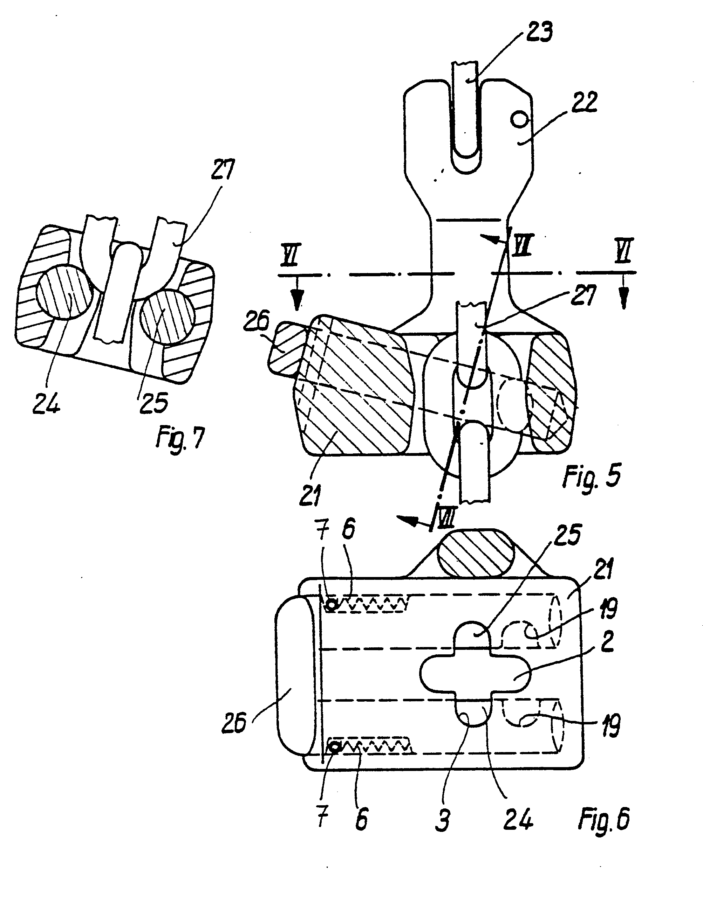

Ein als Verkürzungsorgan ausgebildetes Bauteil zeigen die Figuren 5 bis 7. Das Bauteil gemäß Figuren 5 bis 7 besitzt einen Grundkörper 21, an den über einen Gabelkopf 22 das Endglied eines Kettenstranges anschließbar ist. Im unteren Teil des Grundkörpers 21 sind von den Schenkeln eines Bügels gebildete Verriegelungsbolzen geführt. Die Betätigung der Verriegelungsbolzen erfolgt über ein Joch 26, das sie miteinander verbindet. Wie man aus Figur 5 zu erkennen vermag, verlaufen die Verriegelungsbolzen leicht schräg zum unteren Teil des Grundkörpers. Eine derartige Anordnung hat den Vorteil, daß das sich auf den Verriegelungsbolzen 24 und 25 abstützende Kettenglied 27 die Verriegelungsbolzen 24 und 25 in die Sperrstellung zu drücken sucht.

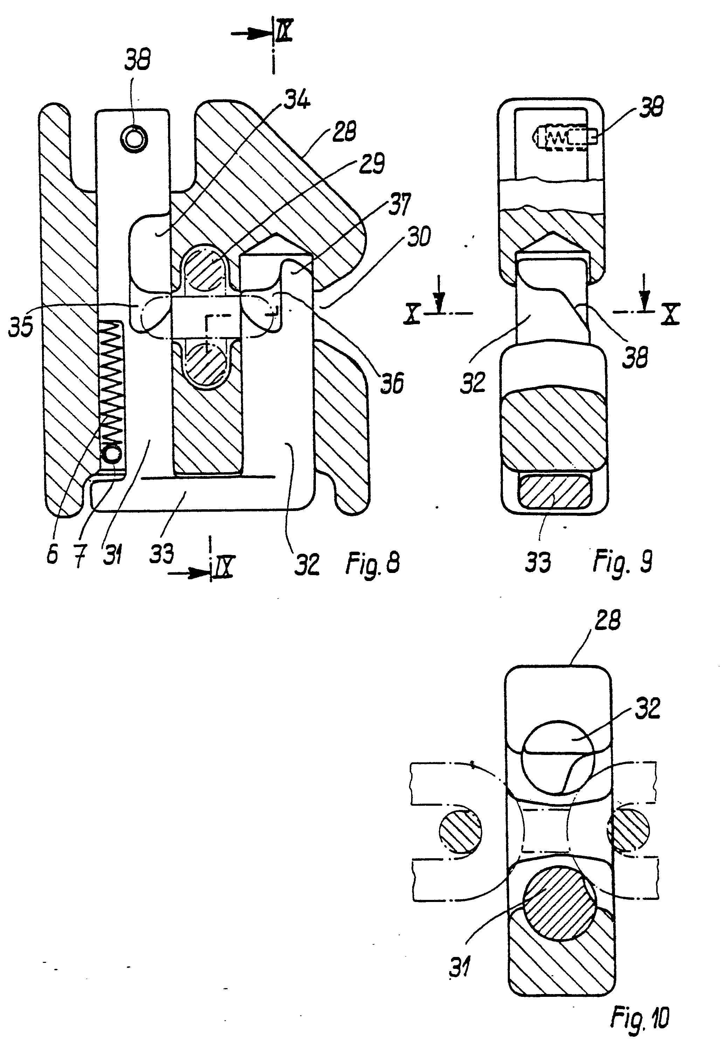

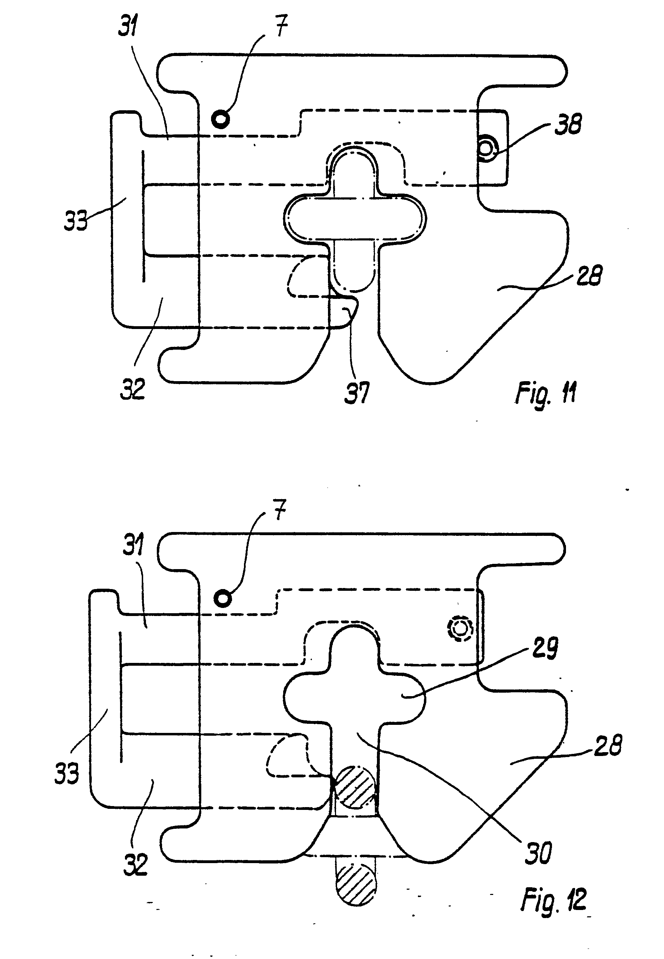

Ein besonders vorteilhaftes Bauteil ist in den Figuren 8 bis 12 dargestellt. Es besitzt einen Grundkörper 28 mit zwei Schlitzen 29 und 30, von denen der Schlitz 30 offen ist. Dies bedeutet, daß ein Kettenstrang von der Seite her in den von den sich kreuzenden Schlitzen 29 und 30 gebildeten Kreuzschlitz einführbar ist. Die Verriegelungsbolzen 31 und 32 sind auch hier wiederum über ein Joch 33 fest miteinander verbunden. Anders als in den zuvor beschriebenen Fällen sind sie jedoch ungleich lang. Eine Feder 6 hält die Verriegelungsbolzen auch in diesem Falle in ihrer Sperrstellung. Der längere Verriegelungsbolzen 31 ist mit einer Quernut 34 versehen, deren eine Wand eine Betätigungsrampe 35 bildet. Eine Betätigungsrampe 36 ist auch am Ende des kürzeren Verriegelungsbolzens 32 angeordnet, der außerdem eine Sperrnase 37 aufweist. Die Sperrnase 37 verhindert ein seitliches Herausziehen eines Kettengliedes aus dem Schlitz 30 in der in Figur 11 dargestellten Zwischenstellung, die durch einen Rastanschlag 38 bestimmt ist. Der Rastanschlag 38 kann bei Bedarf in den Verriegelungsbolzen 31 gedrückt werden, und die Verriegelungsbolzen 31 gedrückt werden, und die Verriegelungsbolzen 31 und 32 lassen sich danach in die in Figur 12 gezeigte Stellung überführen.

Die Betätigungsrampen 35 und 36 ermöglichen es, eine Kette in eine Richtung automatisch durch die Schlitze 29 und 30 zu ziehen. Eine solche freie Beweglichkeit eines Kettenstranges in eine Richtung ist für zahlreiche Anwendungsfälle erwünscht.

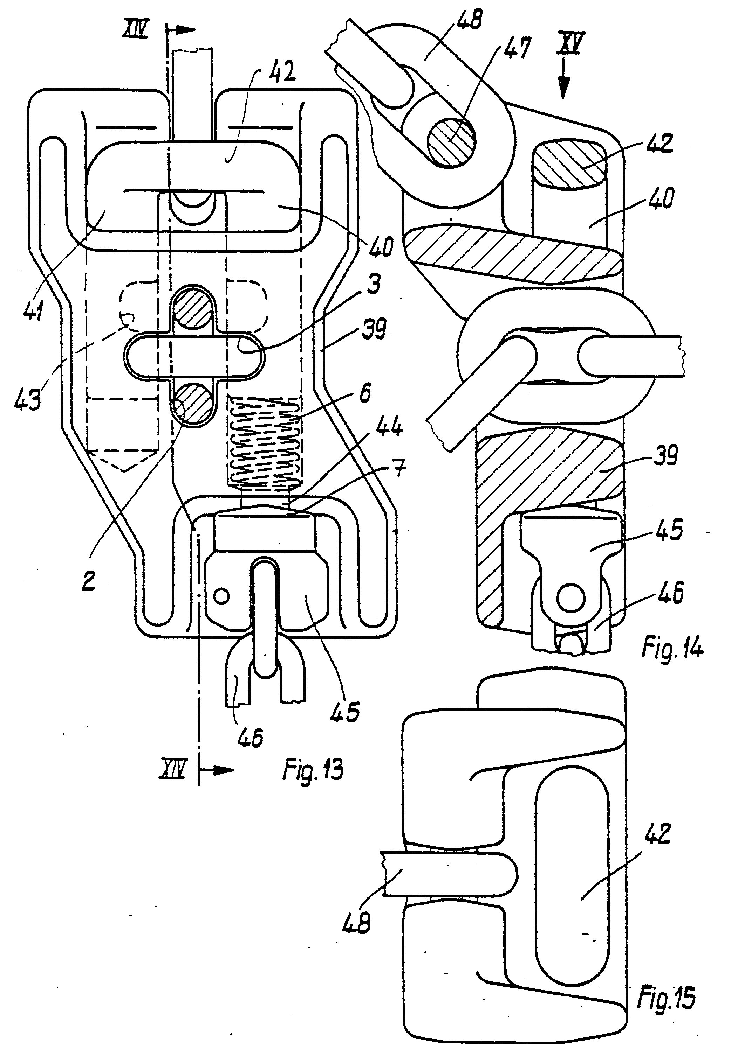

Ein weiteres als Verkürzungsorgan einsetzbares Bauteil zeigen die Figuren 13 bis 15. In einem Grundkörper 39 sind wiederum zwei Verriegelungsbolzen 40 und 41 gelagert, die über ein Joch 42 miteinander verbunden sind. Beide Verriegelungsbolzen sind mit jeweils einer Quernut 43 versehen. Der Verriegelungsbolzen 40 steht über eine Verlängerung 44 mit einem Anschlußteil 45 in Verbindung, an den ein Kettenstrang 46 angreift, der zum Entriegeln des Bauteiles aus der Ferne geeignet ist. An einen Haltebolzen 47 greift ein Kettenglied 48 eines tragenden Kettenstrangabschnittes an.

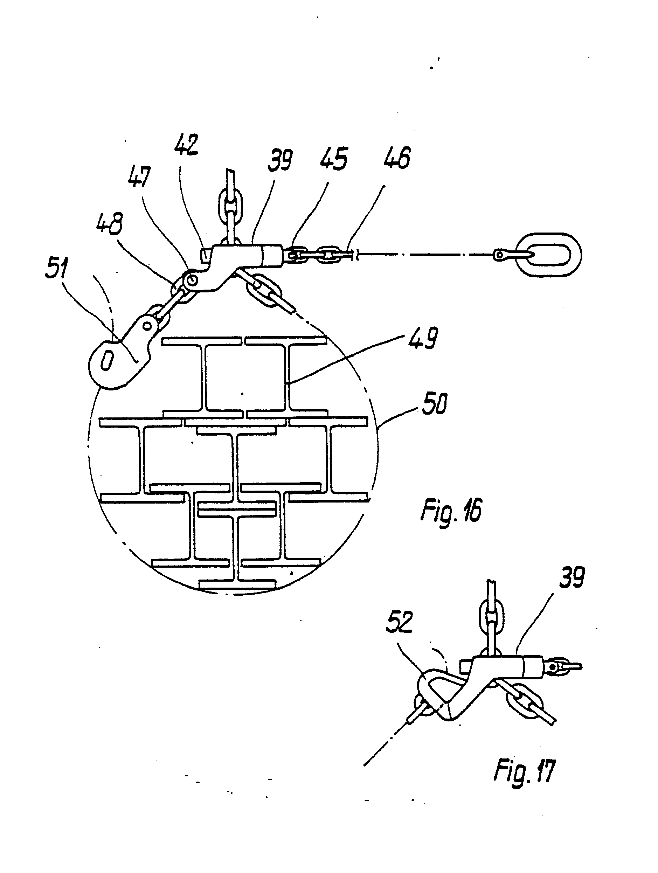

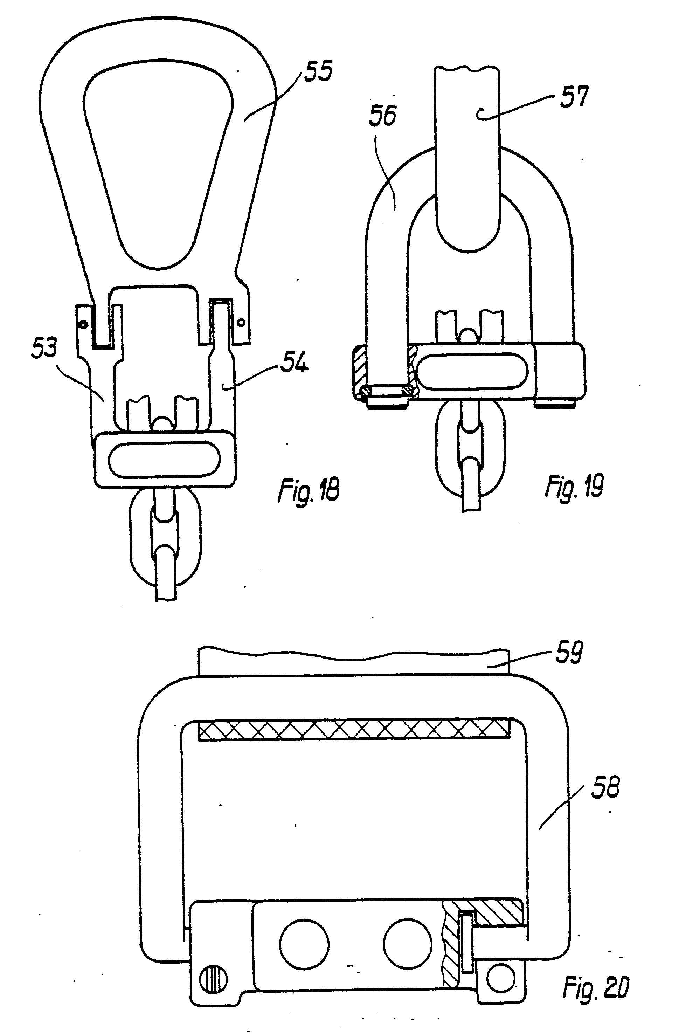

Figur 16 zeigt den Einsatz des in den Figuren 13 bis 15 dargestellten Bauteiles. Man erkennt, daß es zum Bündeln von Trägern 49 mit Hilfe eines Kettenstranges 50 geeignet ist, der in eine Verkürzungsklaue 51 eingehängt ist. Wie in Figur 18 angedeutet, kan die Verkürzungsklaue in das Bauteil integriert werden, indem man den Grundkörper 39 mit einem klauenförmigen Ansatz 52 versieht.

Die Figuren 18 bis 20 veranschaulichen die Vielfalt der Einsatzmöglichkeiten des beschriebenen Bauteiles. In Figur 18 ist ein Bauteil gezeigt, welches mit Anschlußteilen 53 und 54 versehen ist, die seine Verbindung mit einer Ringgabel 55 ermöglichen. Das in Figur 19 gezeigte Bauteil steht mit einem Haltebügel 56 in Verbindung, in den ein Kettenglied 57 eingehängt ist. In Figur 20 schließlich ist eine Lösung gezeigt, bei der ein Bauteil über einen Bügel 58 mit einem Verzurrgurt 59 verbunden ist. Bauteile der offenbarten Art eignen sich folglich als Zusatzteile für Teile von Ketten- und/oder Gurtbaukästen. Sie gestatten eine schnelle Verbindung sowie Verstellung von Ketten im Zusammenhang mit derartigen Kästen.

**Patentansprüche**

1. Für den Einsatz in Verbindung mit Rundgliederketten bestimmtes Bauteil mit einem aus zwei Schlitzen (2, 3 ; 29, 30) gebildeten Kreuzschlitz zur Kettenführung und mit zwei zwischen einer Freigabe- und einer Sperrstellung in Bohrungen des Bauteiles hin- und herverschiebbaren parallelen Verriegelungsbolzen (4, 5 ; 10, 11 ; 24, 25 ; 31, 32 ; 40, 41) zur Kettenarretierung und zur Lastübertragung zwischen dem Bauteil und der Kette, wobei die Verriegelungsbolzen einen Abstand voneinander haben, der größer als die Dicke und kleiner als die doppelte Dicke der Kettenglieder ist, und wobei die Verriegelungsbolzen in der Sperrstellung ein Passieren von Kettengliedern durch den Kreuzschlitz durch Blockieren eines seiner Schlitze verhindern, dadurch gekennzeichnet, daß die Verriegelungsbolzen durch einen Anschlag (7 ; 61) unverlierbar im Bauteil gehalten und gegen die Wirkung mindestens einer sie ständig in die Sperrstellung drückenden Feder (6) aus der Sperrstellung in die Freigabestellung überführbar sind und daß die die Verriegelungsbolzen abstützenden Bohrungen die Sperrbereiche des zu blockierenden Schlitzes (3 ; 30) kreuzen.

2. Bauteil nach Anspruch 1, dadurch gekennzeichnet, daß die Längsachsen der Bohrungen (18) einen Abstand voneinander haben, der im wesentlichen gleich der Länge des zu blockierenden Schlitzes (3) ist.

3. Bauteil nach Anspruch 1 oder 2, dadurch gekennzeichnet, daß mindestens ein Verriegelungsbolzen (14 ; 24, 25 ; 31, 32 ; 40, 41) mit einer Quernut (19 ; 34 ; 43) versehen ist, die in den Bereich des diesem Bolzen zugeordneten Schlitzendes überführbar ist, um dieses freizugeben (Fig. 3, 6, 8 13).

4. Bauteil nach Anspruch 3, dadurch gekennzeichnet, daß der mit der Quernut versehene Verriegelungsbolzen in der Freigabestellung beidseits des ihm zugeordneten Schlitzendes in der Bohrung (18) abgestützt ist.

5. Bauteil nach einem der Ansprüche 1 bis 4, dadurch gekennzeichnet, daß die Verriegelungsbolzen (4, 5 ; 14, 15) lösbar miteinander verbunden sind (Fig. 1, 3).

6. Bauteil nach einem der Ansprüche 1 bis 5, dadurch gekennzeichnet, daß die Verriegelungsbolzen (24, 25) von den Schenkeln eines Bügels gebildet werden (Fig. 6).

7. Bauteil nach einem der Ansprüche 1 bis 6, dadurch gekennzeichnet, daß mindestens ein Verriegelungsbolzen (31, 32) mit einer Betätigungsrampe (35, 36) versehen ist, durch die er von in einer Richtung durch den Kreuzschlitz (29, 30) gezogenen Kettengliedern aus der Verriegelungsin die Freigabestellung überführbar ist (Fig. 8).

8. Bauteil nach Anspruch 7, dadurch gekennzeichnet, daß die Betätigungsrampe (35) von einer Wand der Quernut (34) gebildet wird.

9. Bauteil nach einem der Ansprüche 1 bis 8, dadurch gekennzeichnet, daß ein Rastmechanismus (20) zum Arretieren des Verriegelungsbolzens (15) in der Sperrstellung vorgesehen ist (Fig. 3).

10. Bauteil nach einem der Ansprüche 1 bis 9, dadurch gekennzeichnet, daß die Feder (6) als Druckfeder ausgebildet ist.

11. Bauteil nach einem der Ansprüche 1 bis 10, dadurch gekennzeichnet, daß mindestens ein Anschlag (7) zur Hubbegrenzung der Verriegelungsbolzen (4, 5) dient.

12. Bauteil nach einem der Ansprüche 1 bis 11, dadurch gekennzeichnet, daß die Verriegelungsbolzen (24, 25) derart schräg zur Längsachse der die Schlitze (2, 3) passierenden Kettenglieder verlaufen, daß vom sich auf sie stützenden Kettenglied (27) eine sie in die Sperrstellung drückende Kraftkomponente ausgeübt wird (Fig. 5).

13. Bauteil nach einem der Ansprüche 1 bis 12, dadurch gekennzeichnet, daß der eine Schlitz (30) des Kreuzschlitzes (29, 30) als offener Einführschlitz für ein Kettenglied ausgebildet ist (Fig. 8).

14. Bauteil nach Anspruch 13, dadurch gekennzeichnet, daß die Längsachsen der Verriegelungsbolzen (31, 32) senkrecht zur Längsachse des offenen Schlitzes (30) verlaufen.

15. Bauteil nach Anspruch 13 oder 14, dadurch gekennzeichnet, daß der eine Verriegelungsbolzen (32) mit einer Sperrnase (37) versehen ist, die in der Freigabestellung des Kreuzschlitzes (29, 30) die Einführöffnung des offenen Schlitzes (30) in einer Zwischenstellung blockiert.

16. Bauteil nach Anspruch 15, dadurch gekennzeichnet, daß ein Rastanschlag (38) vorgesehen ist, nach dessen Betätigung die Sperrnase (37) aus der Zwischenstellung in die Freigabestellung überführbar ist.

17. Bauteil nach einem der Ansprüche 1 bis 15, dadurch gekennzeichnet, daß die Verriegelungsbolzen (4, 5 ; 41, 42) mit einem Anschlußteil (9 ; 45) für ein zu ihrer Fernbetätigung dienendes Zugorgan (8 ; 46) versehen sind.

18. Bauteil nach einem der Ansprüche 1 bis 17, dadurch gekennzeichnet, daß das Bauteil als Haken ausgebildet ist.

19. Bauteil nach einem der Ansprüche 1 bis 17, dadurch gekennzeichnet, daß das Bauteil als Verkürzungsorgan ausgebildet ist.

20. Bauteil nach einem der Ansprüche 1 bis 17, dadurch gekennzeichnet, daß das Bauteil als Stopporgan ausgebildet ist.

21. Bauteil nach einem der Ansprüche 1 bis 17, dadurch gekennzeichnet, daß das Bauteil als Zusatzteil für Teile eines Ketten- und/oder Gurtbaukastens ausgebildet ist, mit denen es durch Anschlußteile (53, 54) kuppelbar ist.

22. Bauteil nach einem der Ansprüche 1 bis 21, dadurch gekennzeichnet, daß mindestens ein Verriegelungsbolzen (14) mit einer Aussparung (60) versehen ist, in die der Anschlag (61) zur Hubbegrenzung der Verriegelungsbolzen (14, 15) ragt (Fig. 3).

**Claims**

1. Component intended for use in conjunction with round-link chains, with a cross-slot formed from two slots (2, 3 ; 29, 30) and intended for chain guidance, and with two parallel locking bolts (4, 5 ; 10 ; 11, 24, 25 ; 31, 32 ; 40, 41) shiftable to and fro in bores of the component between a release position and a blocking position and intended for chain retention and load transmission between the component and the chain, the locking bolts being at a distance from one another greater than the thickness of the chain links and less than double the thickness of these, and in the blocking position the locking bolts preventing chain links from passing through the cross-slot by obstructing one of its slots, characterized in that the locking bolts are held captive in the component by means of a stop (7 ; 61) and can be transferred from the blocking position to the release position counter to the effect of at least one spring (6) constantly pressing them into the blocking position, and in that the bores supporting the locking bolts intersect the blocking regions of the slot (3 ; 30) to be obstructed.

2. Component according to Claim 1, characterized in that the longitudinal axes of the bores (18) are at a distance from one another which is essentially equal to the length of the slot (3) to be obstructed.

3. Component according to Claim 1 or 2, characterized in that at least one locking bolt (14 ; 24, 25 ; 31, 32 ; 40, 41) is provided with a transverse groove (19 ; 34 ; 43) which can be transferred into the region of the slot end assigned to this bolt, in order to release the said slot end (Figures 3, 6, 8 and 13).

4. Component according to Claim 3, characterized in that, in the release position, the locking bolt provided with the transverse groove is supported in the bore (18) on both sides of the slot end assigned to it.

5. Component according to one of Claims 1 to 4, characterized in that the locking bolts (4, 5 ; 14, 15) are connected releasably to one another (Figures 1 and 3).

6. Component according to one of Claims 1 to 5, characterized in that the locking bolts (24, 25) are formed by the legs of a shackle (Figure 6).

7. Component according to one of Claims 1 to 6, characterized in that at least one locking bolt (31, 32) is equipped with an actuating slope (35, 36), by means of which it can be transferred from the locking position to the release position by chain links pulled through the cross-slot (29, 30) in one direction (Figure 8).

8. Component according to Claim 7, characterized in that the actuating slope (35) is formed by one wall of the transverse groove (34).

9. Component according to one of Claims 1 to 8, characterized in that a catch mechanism (20) is provided for retaining the locking bolt (15) in the blocking position (Figure 3).

10. Component according to one of Claims 1 to 9, characterized in that the spring (6) is designed as a compression spring.

11. Component according to one of Claims 1 to 10, characterized in that at least one stop (7) serves for limiting the stroke of the locking bolts (4, 5).

12. Component according to one of Claims 1 to 11, characterized in that the locking bolts (24, 25) extend obliquely relative to the longitudinal axis of the chain links passing through the slots (2, 3), in such a way that the chain link (27) supported on them exerts a force component pressing them into the blocking position (Figure 5).

13. Component according to one of Claims 1 to 12, characterized in that one slot (30) of the cross-slot (29, 30) is designed as an open insertion slot for a chain link (Figure 8).

14. Component according to Claim 13, characterized in that the longitudinal axes of the locking bolts (31, 32) extend perpendicularly to the longitudinal axis of the open slot (30).

15. Component according to Claim 13 or 14, characterized in that one locking bolt (32) is equipped with a blocking nose (37) which, in the release position of the cross-slot (29, 30), obstructs the insertion orifice of the open slot (30) in an intermediate position.

16. Component according to Claim 15, characterized in that there is a catch stop (38) which, after being actuated, allows the blocking nose (37) to be transferred from the intermediate position to the release position.

17. Component according to one of Claims 1 to 15, characterized in that the locking bolts (4, 5 ; 41, 42) are equipped with a connecting part (9 ; 45) for a pull member (8 ; 46) serving for actuating them remotely.

18. Component according to one of Claims 1 to 17, characterized in that the component is designed as a hook.

19. Component according to one of Claims 1 to 17, characterized in that the component is designed as a shortening member.

20. Component according to one of Claims 1 to 17, characterized in that the component is designed as a stopping member.

21. Component according to one of Claims 1 to 17, characterized in that the component is designed as an accessory for parts of a chain and/or belt construction kit, to which it can be coupled by means of connecting parts (53, 54).

22. Component according to one of Claims 1 to 21, characterized in that at least one locking bolt (14) is provided with a recess (60), into which projects the stop (61) for limiting the stroke of the locking bolts (14, 15) (Figure 3).

## Revendications

1. Elément de construction destiné à être utilisé en liaison avec des chaînes à maillons ronds, comportant une fente cruciforme formée de deux fentes (2, 3 ; 29, 30) pour le guidage de la chaîne ainsi que deux axes de verrouillage (4, 5 ; 10, 11 ; 24, 25 ; 31, 32 ; 40, 41) parallèles, et coulissant entre une position de déblocage et une position de blocage dans des perçages pratiqués dans l'élément de construction pour le blocage de la chaîne et le transfert de la charge entre l'élément de construction et la chaîne où ces axes de verrouillage sont séparés d'une distance supérieure à l'épaisseur des maillons de la chaîne et inférieure à son double et où ces axes de verrouillage empêchent, en position de blocage, aux maillons de la chaîne de traverser la fente en croix par blocage de l'une de ses fentes, caractérisé en ce que les axes de verrouillage sont maintenus imperdables dans l'élément de construction par une butée (7, 61) et peuvent passer de la position de blocage à la position de déblocage à l'encontre de l'action d'au moins un ressort (6) qui les maintient en permanence dans la position de blocage, et en ce que les perçages qui soutiennent les axes de verrouillage croisent les zones de blocage de la fente (3 ; 30) de blocage.

2. Elément de construction selon la revendication 1, caractérisé en ce que les axes longitudinaux des perçages (18) sont séparés d'une distance qui est à peu près égale à la longueur de la fente (3) de blocage.

3. Elément de construction selon la revendication 1 ou 2, caractérisé en ce qu'un axe de verrouillage (14 ; 24, 25 ; 31, 32 ; 40, 41) au moins, est pourvu d'une rainure transversale (19, 34 ; 43) qui peut être franchie dans la zone de l'extrémité de la fente associée à cet axe pour libérer celle-ci (figures 3, 6, 8, 13).

4. Elément de construction selon la revendication 3, caractérisé en ce que l'axe de verrouillage pourvu de la rainure transversale prend appui, en position de déblocage, dans le perçage (18), des deux côtés de l'extrémité de la fente qui lui est associée.

5. Elément de construction selon l'une des revendications 1 à 4, caractérisé en ce que les axes de verrouillage (4, 5 ; 14, 15) sont assemblés entre eux de manière amovible (figures 1, 3).

6. Elément de construction selon l'une des revendications 1 à 5, caractérisé en ce que les axes de verrouillage (24, 25) sont formés par les branches d'un étrier (figure 6).

7. Elément de construction selon l'une des revendications 1 à 6, caractérisés en ce qu'un axe de verrouillage (31, 32) au moins est pourvu d'une rampe d'actionnement (35, 36) par laquelle des maillons de la chaîne défilant dans la fente en croix (29, 30), peuvent passer de la position de verrouillage à la position de déblocage (figure 8).

8. Elément de construction selon la revendication 7, caractérisé en ce que la rampe d'actionnement (35) est formée par une paroi de la rainure transversale (34).

9. Elément de construction selon l'une des revendications 1 à 8, caractérisé en ce qu'il est muni d'un mécanisme d'encliquetage (20) pour bloquer l'axe de verrouillage (15) dans la position de blocage (figure 3).

10. Elément de construction selon l'une des revendications 1 à 9, caractérisé en ce que le ressort (6) est un ressort de pression.

11. Elément selon l'une des revendications 1 à 10, caractérisé en ce qu'une butée (7) au moins sert à limiter la course de l'axe de verrouillage (4, 5).

12. Elément de construction selon l'une des revendications 1 à 11, caractérisé en ce que les axes de verrouillage (24, 25) sont inclinés par rapport à l'axe longitudinal des maillons de la chaîne traversant les fentes (2, 3), de telle sorte que le maillon de la chaîne (27) qui prend appui sur eux exerce une composante de force les pressant dans la position de blocage (figure 5).

13. Elément de construction selon l'une des revendications 1 à 12, caractérisé en ce que l'une des fentes (30) de la fente cruciforme (29, 30) est une fente d'entrée ouverte d'un maillon de chaîne (figure 8).

14. Elément de construction selon la revendication 13, caractérisé en ce que les axes longitudinaux des axes de verrouillage (31, 32) sont perpendiculaires à l'axe longitudinal de la fente (30) ouverte.

15. Elément de construction selon la revendication 13 ou 14, caractérisé en ce que l'un des axes de verrouillage (32) est pourvu d'un ergot de blocage (37) qui, en position de déblocage de la fente cruciforme (29, 30), bloque l'ouverture d'entrée de la fente (30) ouverte dans une position intermédiaire.

16. Elément de construction selon la revendication 15, caractérisé en ce qu'il est muni d'une butée d'encliquetage (38) dont l'actionnement fait passer l'ergot de blocage (37) de la position intermédiaire à la position de déblocage.

17. Elément de construction selon l'une des revendications 1 à 15, caractérisé en ce que les axes de verrouillage (4, 5 ; 41, 42) sont pouvus d'un élément de raccord (9 ; 45) pour un organe de traction (8 ; 46) servant à sa commande à distance.

18. Elément de construction selon l'une des revendications 1 à 17, caractérisé en ce que l'élément de construction est un crochet.

19. Elément de construction selon l'une des revendications 1 à 17, caractérisé en ce que l'élément de construction est un organe de raccourcissement.

20. Elément de construction selon l'une des revendications 1 à 17, caractérisé en ce que l'élément de construction est un organe d'arrêt.

21. Elément de construction selon l'une des revendications 1 à 17, caractérisé en ce que l'élément de construction est un élément supplémentaire pour des éléments d'une chaîne modulaire et/ou d'une sangle modulaire avec lesquels il peut être accouplé par des éléments de raccord (53, 54).

22. Elément de construction selon l'une des revendications 1 à 21, caractérisé en ce qu'un axe de verrouillage (14) au moins est pourvu d'un évidement (60) dans lequel pénètre la butée (61) pour limiter la course de l'axe de verrouillage (14, 15) (figure 3).

Fig. 1

Fig. 2

Fig. 3

Fig. 4

Fig. 7

Fig. 5

Fig. 6

Fig. 8

Fig. 9

Fig. 10

31   7

38

33

28

32   37

Fig. 11

7

31

29

33

28

30

32

Fig. 12

Fig. 13

Fig. 14

Fig. 15

42  47  48  51  39  45  46  49  50

Fig. 16

52  39

Fig. 17

Fig. 18

Fig. 19

Fig. 20